(19) Europäisches Patentamt
European Patent Office
Office européen des brevets

(11) Numéro de publication: **0 522 027 B1**

(12) # FASCICULE DE BREVET EUROPEEN

(45) Date de publication de fascicule du brevet: **01.03.95**

(51) Int. Cl.$^{6}$: **C08G 69/26**, C08K 7/02, C08L 77/00

(21) Numéro de dépôt: **91907238.9**

(22) Date de dépôt: **22.03.91**

(86) Numéro de dépôt internationale :
**PCT/FR91/00235**

(87) Numéro de publication internationale :
**WO 91/15537 (17.10.91 91/24)**

(54) **COPOLYAMIDES SEMI-AROMATIOUES SEMI-CRISTALLINS.**

(30) Priorité: **30.03.90 FR 9004398**

(43) Date de publication de la demande:
**13.01.93 Bulletin 93/02**

(45) Mention de la délivrance du brevet:
**01.03.95 Bulletin 95/09**

(84) Etats contractants désignés:
**AT BE CH DE DK ES FR GB GR IT LI LU NL SE**

(56) Documents cités:
**EP-A- 0 347 347**
**EP-A- 0 347 348**
**FR-A- 2 325 673**
**FR-A- 2 355 043**

**Chemical Abstracts, vol. 71, no. 24, 15 decembre 1969, (Columbus, Ohio, US), voir page 75**

**Chemical Abstracts, vol. 82, no. 16, 21 avril 1975, (Columbus, Ohio, US), voir page 55**

(73) Titulaire: **NYLTECH FRANCE**
**avenue Ramboz**
**F-69192 Saint-Fons (FR)**

(72) Inventeur: **LAHARY, Pierre-Yves**
**26, rue Malesherbes**
**F-69006 Lyon (FR)**
Inventeur: **COOUARD, Jean**
**Route du Crest,**
**"La Morelière"**
**F-69290 Grézieu-la-Varenne (FR)**

(74) Mandataire: **Esson, Jean-Pierre et al**
**RHONE-POULENC CHIMIE,**
**Direction de la Propriété Industrielle,**
**Centre de Recherches des Carrières,**
**BP 62**
**F-69192 Saint-Fons Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne des copolyamides semi-aromatiques semi-cristallins dérivant d'acide téréphtalique, et de mélanges comprenant une alkyl pentaméthylènediamine et de l'hexaméthylènediamine qui possèdent une température de fléchissement sous charge (en abréviation : TFSC ; normes : NF T 51005) sous 1,8 MPa au moins égale à 240 °C, quand ces copolyamides sont chargés avec au moins 10 à 60% en poids par rapport au poids copolyamide + charge d'une charge de fibres de verre et moulés. La présente invention concerne encore des procédés de fabrication de ces copolyamides, ainsi que des compositions, notamment pour moulage, faites à partir de ces copolyamides.

On connaît déjà depuis longtemps des polyamides dérivant de diamine(s) aliphatique(s) et de diacide(s) carboxylique(s) aliphatique(s) ou aromatique(s). Selon leur composition, ces polyamides sont des polymères semi-cristallins ayant des températures de fusion (Tf) élevées ou des substances complètement amorphes ayant des températures de transition vitreuse (Tg) relativement basses.

On utilise avantageusement les polyamides semi-cristallins lorsque l'on souhaite fabriquer des articles conformés qui présentent une bonne résistance thermo-mécanique à température élevée. Le plus connu des polyamides semi-cristallins est le polyamide 6.6 (polymère d'hexaméthylènediamine et d'acide adipique) ; ce polyamide est aisément transformable par voie fondue, mais, en raison d'une Tg basse d'environ 50 °C, il trouve des domaines d'application qui sont limités à ceux faisant intervenir des températures d'utilisation qui restent inférieures à 100 °C. D'autres polyamides semi-cristallins sont apparus qui présentent une Tg plus élevée et, par voie de conséquence, une meilleure consevation des valeurs des propriétés mécaniques en fonction de la température. Un polyamide de cette nature qui est particulièrement intéressant est celui obtenu à partir d'acide téréphtalique et de méthyl-2 pentaméthylènediamine-1,5 (cf. JP-A-69/019.551) en raison de la possibilité d'obtenir une Tg de l'ordre de 142 °C ; avec un pareil polyamide on relève bien la stabilité thermique, mais on a constaté qu'il n'est pas possible :

- quand ce polymère est chargé avec une charge de remplissage ou de renforcement de nature fibreuse, puis transformé par moulage par injection dans des conditions industriellement économiques en utilisant un moule froid, c'est-à-dire un moule maintenu à une température comprise entre 100 et 150 °C, avec des temps de refroidissement de courte durée (il s'agit du temps minimum de maintien de la matière injectée dans le moule, pour lequel la pièce est éjectée sans déformation ou pour lequel le produit moulé tombe du moule sans difficulté), c'est-à-dire des temps de refroidissement compris entre 20 et 40 secondes,
- d'obtenir une TFSC sous 1,8 MPa élevée pouvant atteindre et dépasser 240 °C. On a trouvé que cette TFSC est par exemple de 245 °-250 °C pour des articles moulés qui sont chargés avec 10 à 60 % en poids de fibres de verre (par rapport au poids de l'ensemble polyamide + charge) et obtenus par la technique du moule froid. L'obtention, dans ces conditions de moulage, d'une faible valeur pour la TFSC est à mettre en relation avec une faible aptitude à la cristallisation du polyamide considéré obtenu à partir d'acide téréphtalique et d'alkylpentaméthylènediamine qui fait que refroidi rapidement, en particulier lorsqu'il est injecté dans un moule froid, le dit polyamide ne cristallise pas ou que partiellement. Les articles obtenus peuvent alors être amorphes ; ils sont de plus susceptibles d'évoluer par suite d'une cristallisation lors d'un réchauffement. On comprend que ce type de polyamide semi-aromatique n'est utilisable qu'en utilisant un moule chaud, c'est-à-dire un moule maintenu à une température comprise entre 170 ° et 200 °C, avec des temps de refroidissement de longue durée, c'est-à-dire des temps de refroidissement compris entre 2 et 4 minutes, et par conséquent leur développement reste très limité.

On connait également par le brevet européen n° 0 347 848 des polyamides semi-cristallins obtenus à partir d'acide téréphtalique de méthyl-2 pentaméthylènediamine et d'une ami ne aromatique.

L'utilisation d'un polyamide semi-aromatique semi-cristallin à base d'unités de récurrence dérivant d'acide téréphtalique et d'alkylpentaméthylènediamine, pour moulage dans des conditions industriellement économiques, repose donc sur la nécessité de modifier son aptitude à la cristallisation. Le polymère doit avoir acquis, à la sortie du moule froid, une morphologie semi-cristalline dans toute la masse de la pièce.

Poursuivant des travaux dans ce domaine de la technique, la Demanderesse a trouvé :

- que la vitesse de cristallisation pouvait être augmentée à un niveau tel qu'il soit possible de réaliser des moulages en moule froid et d'obtenir notamment des articles moulés ayant, quand ils sont chargés avec au moins une charge fibres de verre, une TFSC sous 1,8 MPa au moins égale à 240 °C,
- en préparant des copolyamides par emploi, à côté de l'acide téréphtalique, d'un réactif aminé comprenant une alkylpentaméthylènediamine et de l'hexaméthylènediamine.

Plus spécifiquement, la présente invention concerne des copolyamides semi-aromatiques semi-cristallins obtenus à partir de réactifs comprenant de l'acide téréphtalique (ou un dérivé) et de la méthyl-2

pentaméthylènediamine, ces copolyamides étant caractérisés par les points suivants :

. ils consistent en unités de récurrence de formule (I), (II), (III) et (IV) :
  (I) désignant la structure :

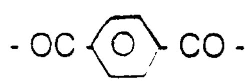

  (II) désignant la structure :

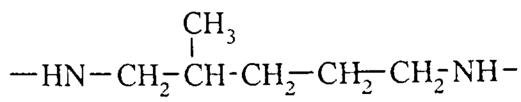

  (III) désignant la structure :

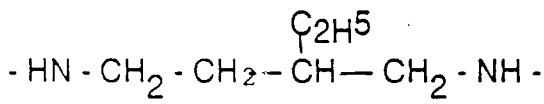

  (IV) désignant la structure : $-HN-(CH_2)_6$ NH-
  et des unités non conformes dérivées de bis-hexaméthylènetriamine les unités de formule (III) étant facultatives,
. le rapport moléculaire des unités (I) par rapport à la somme des unités (II) + (III) + (IV) est égal à 1 ;
. la quantité des unités (III) dans le mélange (II) + (III) se situe dans l'intervalle allant de 0 à 5 % en mole et celle des unités (II), par rapport à la même référence, se situe dans l'intervalle allant de 100 à 95 % en mole ;
. la quantité des unités (IV) dans le mélange (II) + (III) + (IV) se situe dans l'intervalle allant de 40 à 90 % en mole ;
. la teneur en unités non conformes dérivées exprimée en pourcentage en poids de bis-hexaméthylène-triamine par rapport au poids de copolyamide obtenu, est inférieure à 0,5 % et plus précisément se situe dans l'intervalle allant de 0,01 à 0,5 %.

Lorsque la quantité des unités (IV) devient supérieure à 90 % en mole, la température de fusion (Tf) des copolyamides obtenus augmente à un niveau tel que la différence entre la Tf et la température de décomposition du copolyamide devient trop faible, c'est-à-dire une différence ayant des valeurs inférieures à 30 °C, et le copolyamide est dégradé pendant sa transformation par moulage par injection et les propriétés thermo-mécaniques des articles moulés obtenus sont réduites.

Lorsque la quantité des unités (IV) devient inférieure à 40 % en mole, on a constaté que l'aptitude à la cristallisation des copolyamides est insuffisante et que l'on ne peut pas obtenir les valeurs de TFSC souhaitées. Plus précisément, la détermination du comportement thermique fusion-cristallistion est faite par analyse calorimétrique différentielle (DSC), à l'aide d'un appareil METTLER de type TA 3000 DSC 30, en opérant sous azote selon un cycle thermique bien déterminé qui sera défini ci-après. Des résultats donnés, on retient les valeurs suivantes : Tf = température au sommet du pic de fusion ;
Tcr = température au sommet du pic de cristallisation lors du refroidissement ;
$\Delta T$ = Tf - Tcr. La différence de température $\Delta T$ est d'autant plus faible que l'aptitude à la cristallisation du copolyamide est importante. Lorsque la quantité des unités (IV) devient inférieure à 40 % en mole, on a constaté que la différence de température $\Delta T$ prend des valeurs, qui correspondent à une aptitude à la cristallisation insuffisante, qui sont supérieures à 60 °C.

Selon une modalité préférentielle, les copolyamides de la présente invention présentent une structure telle que définie ci-avant dans laquelle la quantité des unités (IV) dans le mélange (II) + (III) + (IV) se situe dans l'intervalle allant de 45 à 75 % en mole ; dans ces conditions la différence de température qT, qui est faible, prend des valeurs qui se situent dans l'intervalle allant de 10 à 55 °C.

En ce qui concerne leurs valeurs moléculaires, les copolyamides selon la présente invention présentent :

- des caractéristiques de viscosité, exprimées sous forme de l'indice de viscosité (IV) mesuré selon la norme ISO R 307 (2e édition de 1984) sur une solution contenant 0,5 g de polymère (séché pendant

2 heures à 60 °C sous balayage d'argon) dans 100 $cm^3$ de métacrésol ou de $H_2SO_4$ concentré à 95 % en poids, qui sont au moins égales à 60 ml/g et pouvant être comprises entre 80 et 250 ml/g ;

- des masses moléculaires moyennes en nombre (Mn), déterminées par dosage des groupements terminaux et des unités non conformes, qui sont au moins égales à 9000 g/mole et pouvent être comprises entre 10000 et 25000 g/mole.

En ce qui concerne leurs valeurs thermo-mécaniques, les copolyamides selon la présente invention (prise dans son objet général ou préférentiel) présentent notamment :

- des Tg, mesurées par analyse DSC, qui sont au moins égales à 120 °C et peuvent être comprises entre 125 ° et 140 °C ;
- des TFSC sous 1,8 MPa, mesurées selon la norme NF T 51005, qui sont au moins égales à 240 °C et peuvent être comprises entre 250 ° et 310 °C, quand les copolyamides sont chargés avec par exemple 10 à 60 % en poids (par rapport au poids copolyamide + charge) d'au moins une charge de fibres de verre.

Les unités de formule (I) proviennent d'acide téréphtalique ou d'un dérivé comme par exemple un dihalogénure ou un diester.

Les unités de formule (II) sont issues de méthyl-2 pentaméthylènediamine-1,5.Quand aux unités éventuelles de formule (III), elles dérivent d'éthyl-2 tétraméthylènediamine-1,4. On peut effectuer la synthèse de la méthyl-2 pentaméthylènediamine utilisée par hydrogénation du dinitrile de l'acide méthyl-2 glutarique selon des procédés connus. De même, la synthèse de l'éthyl-2 tetraméthylènediamine peut être effectuée par hydrogénation du dinitrile de l'acide éthyl-2 succinique.

S'agissant des unités de formules (IV), elles proviennent de l'hexaméthylènediamine-1,6.

A propos des unités non conformes, leur structure dérive de la bis-hexaméthylènetriamine $H_2N-(CH_2)_6-NH-(CH_2)_6-NH_2$. Ces unités non conformes de structure (V) représentée par : $-HN-(CH_2)_6-NH-(CH_2)_6-NH-$ et/ou

$$-HN-(CH_2)_6-N-(CH_2)_6-NH-$$

sont formées au cours de la polycondensation par une réaction de dimérisation de l'hexaméthylènediamine de départ et/ou de son dérivé engagé dans la polycondensation et possédant un seul groupement $NH_2$ libre. La présence des unités non conformes en quantités supérieures à 0,5 % en poids, est de nature notamment à induire, au niveau du copolyamide fini, une augmentation indésirable des caractéristiques de viscosité.

Les copolyamides selon la présente invention peuvent être préparés par application de procédés de polycondensation bien connus des experts dans le domaine des polymères : polycondensation par voie thermique en opérant en masse fondue ou en présence de solvant(s) organique(s), à partir du diacide (acide téréphtalique ; ou réactif acide) et des diamines (méthylpentaméthylènediamine + hexaméthylènediamine + éventuellement éthyltétraméthylènediamine ; ou réactif aminé) ; polycondensation en solution ou polycondensation interfaciale à partir d'un dihalogénure du diacide et des diamines.

Pour la réalisation de cette polycondensation, et ceci constitue d'autres objets de la présente invention, on préfère opérer par voie thermique.

Un premier procédé commode de cette nature, qui s'applique tout préférentiellement quand la composition des réactifs de départ comprend 40 à 60 % en mode d'hexaméthylènediamine dans le mélange des diamines, consiste dans la technique de polycondensation en masse fondue selon laquelle on polycondense une composition de départ :

* renfermant : (i) soit des quantités stoechiométriques ou voisines de la stroechiomètrie de diacide et de diamines apportant des nombres de groupements COOH et $NH_2$ égaux ou voisins, soit leur(s) sel-(s) stoechimétrique(s) avec éventuellement un excès de diacide et/ou de diamine(s) à l'état libre, (2i) de l'eau en quantité suffisante pour permettre de conduire la distillation de l'étape 1 indiquée ci-après dans les conditions particulières de température (T1 et T2) et de pression (P) indiquées également ci-après et (3i) éventuellement un catalyseur,
* en opérant dans un système clos de type autoclave, et
* en enchaînant les étapes suivantes :
  - étape 1 : dans laquelle, l'autoclave étant fermé, on augmente progressivement la température de la composition de départ jusqu'à une certaine valeur T1 se situant dans l'intervalle allant de 170 °C à 240 °C ; puis, sous une pression constante P égale à la pression autogène de vapeur d'eau obtenue qui se situe dans l'intervalle allant de 0,7 à 2,6 MPa, on élimine par distillation régulière l'eau présente dans la masse réactionnelle en élevant progressivement dans le même temps la

température de la masse à une valeur T2 supérieure à la température T1 atteinte avant distillation se situant dans l'intervalle allant de 215 °C à 320 °C ;

- étape 2 : dans laquelle on abaisse progressivement la pression de la valeur de la pression autogène jusqu'à la valeur de la pression atmosphérique et éventuellement on élève dans le même temps la température de la masse à une valeur T3 supérieure d'une dizaine à plusieurs dizaines de degrés Celsius à la température T2 atteinte avant décompression, en continuant à assurer pendant la durée de cette décompression une distillation régulière d'eau ;
- étape 3 : dans laquelle on achève la polycondensation en agitant la masse réactionnelle un certain temps, en opérant sous la pression atmosphérique et éventuellement/ou sous une pression inférieure avec une température de masse égale ou supérieure à la température T2 ou T3 obtenue en fin d'étape 2, pendant une durée suffisante permettant d'obtenir un polyamide ayant les caractéristiques moléculaires et de viscosité souhaitées.

Par l'expression "eau présente dans la masse réactionnelle" qui apparaît ci-avant dans l'étape 1 à propos de la distillation, on entend définir l'eau contenue dans les compositions de départ plus l'eau qui se forme éventuellement par réaction de polycondensation du réactif acide et du réactif aminé. La quantité d'eau contenue dans les compositions de départ n'est pas critique dès l'instant où elle permet de conduire la distillation de l'étape 1 dans les conditions particulières de températures (T1 et T2) et de pression autogène (P) indiquées ci-avant ; cette quantité d'eau peut être déterminée aisément par l'homme de métier à l'aide de ses connaissances ordinaires et d'essais simples.

Pour la réalisation de l'étape 1 du procédé de polycondensation qui vient d'être décrit, on peut engager des compositions de départ qui se présentent sous forme de mélanges : soit à base du réactif acide, du réactif aminé, d'eau et éventuellement de catalyseur, le réactif acide étant utilisé à l'état solide et le réactif aminé étant utilisé par exemple dans l'état où il se trouve naturellement ou sous forme de solution aqueuse ; soit à base du (ou des) sel(s) de diacide et de diamine, d'eau et éventuellement de diacide et/ou de diamine(s) à l'état libre et de catalyseur, le (ou les) sel(s) étant utilisés par exemple à l'état solide, en dispersion aqueuse ou sous forme de solution aqueuse.

S'agissant du catalyseur (3i) qui peut être utilisé, il consiste généralement soit en un composé ($\alpha$), soit en un composé ($\beta$), ($\alpha$) désignant un mono- ou polyacide oxygéné minéral ou un mono- ou polyacide oxygéné organique autre qu'un acide carboxylique, dont l'une au moins des fonctions acides possède une constante d'ionisations pka dans l'eau à 25 °C égale ou inférieure à 4, ($\beta$) désignant un sel alcalin ou alcalino-terreux de cet acide.

On préfère utiliser comme acide fort ($\alpha$), les acides dérivés du phosphore et plus particulièrement les acides hypophosphoreux, phosporeux, orthophosphorique, pyrophosphorique, méthylphosphonique, phénylphosphonique, benzylphosphonique, diméthylphophinique, diphénylphosphinique, méthylphénylphosphinique, dibenzylphosphinique, méthylphosphoneux, phénylphosphoneux ou benzyl phosphoneux.

Pour ce qui est du sel d'acide ($\beta$), on fait appel généralement à des sels de métaux alcalins ou de métaux alcalino-terreux dérivés des oxyacides minéraux ou organiques ($\alpha$).

On préfère utiliser comme sel ($\beta$), ceux qui sont totalement solubles dans le mélange réactionnel . Parmi ces sels ($\beta$) préférés, conviennent bien les sels de sodium et de potassium issus des types particuliers d'oxyacides minéraux ou organiques ($\alpha$) qui conviennent cités ci-avant. Les sels ($\beta$) qui conviennent tout particulièrement bien sont les sels de sodium et de potassium issus des acides préférés dérivés du phosphore cités nommément ci-avant.

Les proportions d'acide fort ($\alpha$) ou de sel ($\beta$), exprimées en pourcentage en poids par rapport au copolyamide final, sont comprises généralement entre 0,01 et 1 % et de préférence entre 0,01 et 0,5 %.

A propos de la conduite de l'étape 1 du procédé de polycondensation dont on parle, il convient de faire noter que le chauffage progressif de la composition de départ jusqu'à la température T1 peut se faire sur une durée allant par exemple de 10 minutes à 2 heures. Quant à la distillation sous pression autogène constante P, elle s'effectue sur une période de temps allant par exemple de 30 minutes à 3 heures 30 minutes.

Dans la conduite de l'étape 1, on préfèrera (et cette préférence ne concerne que l'étape 1 du premier procédé commode) opérer la distillation sous une pression autogène constante P se situant dans l'intervalle allant de 0,9 à 1,8 MPa en choisissant : une température T1 de début de distillation se situant dans l'intervalle allant de 190 °C à 215 °C et une température T2 juste avant décompression se situant dans l'intervalle allant de 235 °C à 310 °C et, plus préférentiellement encore, allant de 265 °C à 300 °C.

Dans la conduite de l'étape 2, la décompression, qui peut progresser par paliers successifs, s'effectue sur une période allant par exemple de 20 minutes à 2 heures 30 minutes et on élève de préférence dans le même temps la température de la masse réactionnelle à une valeur T3 se situant par exemple dans l'intervalle allant de 300 °C à 340 °C.

Dans la conduite de l'étape 3, on termine la polycondensation en laissant réagir la masse réactionnelle à la température T3 ou à une température pouvant être supérieure, de quelques degrés à une dizaine de degrés, à T3 en opérant de préférence sous une pression réduite se situant dans l'intervalle allant de $1.10^2$ à $1000.10^2$ Pa pendant une période de temps (comprenant la durée de mise sous pression réduite) allant par exemple de 10 minutes à 3 heures.

Un second procédé commode de polycondensation en masse, qui s'applique également bien quelles que soient les proportions d'hexaméthylène diamine dans le mélange des diamines, consiste à polycondenser la composition de départ, qui a été définie ci-avant, en mettant en oeuvre l'étape 1 du premier procédé commode qui vient d'être défini et en enchaînant ensuite les étapes suivantes :

- étape 2' : dans laquelle on effectue rapidement, sur une durée allant de 5 minutes à 30 minutes, la vidange du réacteur : pendant cette période la pression autogène de vapeur d'eau est abaissée de la valeur de la pression autogène jusqu'à la valeur de la pression atmosphérique et, en opérant sous une atmosphère inerte telle que par exemple l'azote, on récupère le prépolymère formé, puis on le refroidit et on le transforme par broyage en poudre ;
- étape 3' : dans laquelle on réalise la réaction d'achèvement de la polycondensation en effectuant la post-condensation du prépolymère en poudre obtenu : soit en phase solide, en opérant dans un réacteur maintenu sous une pression, éventuellement en présence de gaz inerte tel que par exemple l'azote, comprise entre la valeur de la pression atmosphèrique et une valeur inférieure égale à $0,1.10^2$ Pa, à une température allant de 200 °C à 280 °C et pendant une durée suffisante permettant d'obtenir un copolyamide ayant les caractéristiques moléculaires et de viscosité souhaitées, allant par exemple de 10 minutes à 5 heures ; soit en phase fondue, en opérant dans une extrudeuse-dégazeuse comportant une ou plusieurs vis, les paramètres de marche essentiels de la dite extrudeuse-dégazeuse consistant dans : la température de la zone de réaction qui se situe dans l'intervalle allant de 310 °C à 360 °C, la pression de dévolatilisation de cette zone qui se situe dans l'intervalle allant de la valeur de la pression atmosphérique à une valeur inférieure égale à $0,1.10^2$ Pa et le temps de séjour du prépolymère dans l'extrudeuse-dégazeuse qui se situe dans l'intervalle allant de 30 secondes à 5 minutes ; soit en enchaînant la post-condensation en phase fondue et la post-condensation en phase solide.

Un troisième procédé commode, qui s'applique encore également bien quelles que soient les proportions d'hexaméthylènediamine dans le mélange des diamines, consiste dans la technique de polycondensation thermique conduite en solution, selon laquelle on enchaîne les étapes suivantes :

- étape 1'' : conduite sous atmosphère inerte (azote), dans laquelle on dissout la composition de départ, renfermant les éléments (i) et (3i) dont on a parlé ci-avant à propos du milieu de départ des premier et second procédés, dans un solvant polaire aprotique ou mélange de pareils solvants ayant un point d'ébullition supérieur à 220 °C en opérant à température ambiante de 20 °C à 30 °C, puis on élève la température de la solution obtenue à la température de réaction désirée comprise entre 190 °C et 220 °C, et on élimine par distillation régulière sous la pression atmosphérique l'eau d'amidification pendant une durée allant de 20 minutes à 2 heures ;
- étape 2'' : conduite encore sous atmosphère inerte, dans laquelle on élève la température de la solution réactionnelle à une valeur située au-dessus du point d'ébullition du (ou des) solvant(s) mis en oeuvre, puis on élimine toujours par distillation sous la pression atmosphérique le reste d'eau d'amidification et le (ou les) solvant(s) présent(s) ;
- étape 3'' : dans laquelle, une fois le (ou les) solvant(s) éliminé(s), on achève la polycondensation en laissant réagir la masse réactionnelle a une température allant de 300 ° à 340 °C, en opérant sous une pression réduite se situant dans l'intervalle allant de $0,1.10^2$ Pa à $1.10^2$ Pa pendant une durée (comprenant la durée de mise sous pression réduite) suffisante permettant d'obtenir un copolyamide ayant les caractéristiques moléculaires et de viscosité souhaitées, allant par exemple de 10 minutes à 1 heure.

Les solvants qui conviennent bien sont en particulier la diméthyl-1,3 imidazolidone-2, la diméthyl-1,3 tétrahydro-3,4,5,6 pyrimidone-2, la tétraméthylsulfone, le diphénylsulfoxyde et un mélange de ces solvants.

Les procédés qui viennent d'être décrits peuvent être appliqués à des compositions comprenant soit des quantités stoechiométriques d'un réactif acide et d'un réactif aminé apportant des nombres égaux de groupements COOH et $NH_2$, soit leur(s) sel(s) stoechiométrique(s).

Il peut être avantageux d'engager des quantités de réactif aminé qui sont supérieures à celles juste nécessaires pour avoir l'équivalence entre les groupements COOH et $NH_2$ dans les compositions de départ, de manière à introduire dans la masse réactionnelle un excès de diamine(s) permettant de compenser la perte de ce réactif qui intervient essentiellement lors de l'opération de distillation sous pression constante (étape(s) 1 ou 1'' + 2''), puis lors de l'opération de décompression (étape 2 ou 2'). Dans le cadre de ce

mode opératoire avantageux, l'excès de réactif aminé, exprimé par le pourcentage molaire de réactif aminé en excès suivant la relation :

$$\frac{\text{nombre total de moles de réactif aminé - nombre de mole de réactif aminé nécessaire pour la stoechiométrie}}{\text{nombre de moles de réactif aminé nécessaire pour la stoechiométrie}} \times 100$$

se situe habituellement dans l'intervalle allant de 0,5 à 6 % et, de préférence, allant de 1 à 4 %.

Les procédé qui viennent d'être décrits offrent la possibilité de préparer des copolyamides semi-aromatiques semi-cristallins, à partir d'un réactif ami né comprenant une alkylpentaméthylènediamine et de l'hexaméthylènediamine, en réduisant le développement de réactions parasites (sur lesquelles on va revenir ci-après) qui concernent ces diamines et entraînent notamment une perte en basicité totale.

La méthyl-2 pentaméthylènediamine-1,5 est un composé qui se cyclise facilement ; cette cyclisation, quand elle concerne la diamine libre, donne naissance à la méthyl-3 pipéridine (produit appelé dans ce qui suit par l'expression : "amine cyclique libre") avec libération d'ammoniac $NH_3$ et, quand elle concerne la diamine engagée dans les réactions d'amidification par un seul de ses groupes fonctionnels, elle agit comme un mécanisme limiteur de chaînes en donnant naissance à des groupes de blocage de formule :

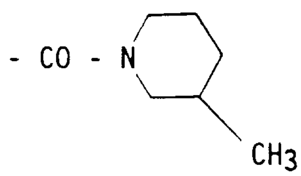

avec aussi libération d'ammoniac. L'amine cyclique libre formée est récupérée essentiellement au moment de l'élimination de l'eau par distillation sous pression constante (étape(s) 1 ou 1" + 2") puis pendant la décompression (étape 2 ou 2'). Une autre réaction parasite consiste dans la perte par entraînement du réactif aminé (en particulier méthyl-2 pentaméthylènediamine et hexaméthylènediamine) qui intervient essentiellement au moment de l'élimination de l'eau présente par distillation sous pression constante (étape(s) 1 ou 1" + 2") puis pendant la décompression (étape 2 ou 2'). Le résultat de ces réactions parasites se présente donc sous deux aspects néfastes :

- d'un côté, une perte en basicité totale impliquant d'une part une perte de stoechiométrie en cours de polycondensation entre les groupements amino primaire et les groupements carboxy qui réagissent en empêchant par voie de conséquence la possibilité d'augmenter aisément la masse moléculaire du polyamide en formation, et d'autre part une réelle difficulté pour reproduire industriellement le procédé mis en oeuvre. La perte en basicité totale dont on a parlé ci-avant est établie par rapport à la quantité totale de réactif aminé engagé et elle est exprimée par l'équation :

$$\frac{\text{basicité perdue}}{\text{basicité engagée}} \times 100$$

dans laquelle :

. l'expression "basicité perdue" correspond à la somme : nombre d'équivalents $NH_2$ de réactif aminé perdu en cours de distillation + nombre d'équivalents NH d'amine cyclique libre + nombre d'équivalents $NH_2$ d'ammoniac. Cette basicité perdue est mesurée directement, à l'aide d'un dosage potentiométrique, sur les distillats c'est-à-dire sur la totalité de l'eau condensée pendant les phases de distillation sous pression constante et pendant la décompression ;

. l'expression "basicité engagée" correspond au nombre d'équivalents $NH_2$ du réactif ami né engagé. L'expression "nombre d'équivalents" amino primaire ou secondaire d'un composé définit le nombre de groupements amino primaire ou secondaire contenus dans une mole dudit composé ; par exemple 1 mole de réactif aminé consistant dans la méthyl-2 pentaméthylènediamine contient 2 équivalents amino primaire $NH_2$ tandis qu'une mole d'ami ne cyclique consistant dans la méthyl-3 pipéridine contient un équivalent amino secondaire NH ;

- et d'un autre côté, l'existence dans le milieu de polycondensation d'un taux élevé de groupements terminaux de type amine cyclique qui jouent le rôle de limiteur de chaîne et peuvent limiter l'accès à de hautes masses moléculaires.

Avec les procédés de préparation de copolyamides semi-aromatiques qui viennent d'être décrits, on obtient une perte de basicité totale limitée qui peut se situer à des valeurs inférieures à 6 % et atteindre des valeurs aussi basses que celles comprises entre 1 et 4 %. On obtient aussi des copolyamides présentant un taux de groupements terminaux de type amine cyclique, jouant le rôle de limiteur de chaîne, limite qui peut se situer à des valeurs inférieures à 70 milliéquivalents par kilogramme de polymère (méq/kg) et atteindre des valeurs aussi basses que celles comprises entre 2 et 50 méq/kg ; la détermination de ces taux de groupements terminaux de type amine cyclique est effectuée selon les indications données ci-après.

On peut ajouter dans les copolyamides de l'invention, avant, pendant ou vers la fin de la polycondensation, un ou plusieurs additif(s) habituellement utilisé(s) lors de la préparation de polyamides. Ces additifs sont par exemple des anti-oxydants, des agents ignifugeants, des stabilisants à la lumière, des stabilisants thermiques, des agents de démoulage, des azurants optiques, des colorants, etc.

On peut également faire appel à des charges de remplissage ou de renforcement qui peuvent être ajoutées aux copolyamides en utilisant des techniques faisant appel au mélange de poudres et/ou de granulés, ou encore y être incorporés en veine fondue, en réalisant une nouvelle fusion des copolyamides dans des dispositifs appropriés comme par exemple une extrudeuse. Les charges qui peuvent être ajoutées sont très diverses. Il peut s'agir d'une matière fibreuse comme : des fibres d'amiante ; des fibres de carbone ; des fibres de carbure ou de nitrure d'un métal ou d'un métalloïde, telles que des fibres de carbure de silicium, de nitrure de silicium, de carbure de bore ; des fibres de verre ; des fibres organiques pouvant résister à la chaleur ; des mélanges de deux ou de plus de deux des matières fibreuses précitées. La charge peut être constituée encore notamment par : des microbilles de verre ; des paillettes de mica ; du talc ; ou des associations de deux ou de plus de deux des matières non fibreuses précitées ; ou des associations d'au moins une matière fibreuse avec au moins une des matières non fibreuses précitées. Parmi ces charges, on préfère particulièrement les fibres de verre. Ces fibres de verre peuvent être les fibres de verre ordinaires ou des fibres de verre traitées, par exemple à l'aide de silane. Généralement ces fibres de verre présentent un diamètre se situant entre 3 et 30 $\mu$m et une longueur inférieure à 10 mm.

Les compositions ainsi obtenues (et elles constituent un autre objet de la présente invention), comprenant un copolyamide et au moins une charge, peuvent être aisément transformées par exemple par moulage par injection ; ces compositions renferment une (ou des) charge(s) en quantité pouvant atteindre 80 % du poids de l'ensemble polymère + charge(s). La proportion de charge(s) est de préférence comprise entre 10 % et 60 % et, plus préférentiellement encore, comprise entre 30 % et 60 %.

Les copolyamides selon l'invention peuvent être transformés à l'aide des machines conventionnelles par exemple d'injection, d'extrusion ou de filage pour donner des objets conformés tels que notamment des articles moulés pleins, des fils ou des films. S'agissant des conditions de la transformation, les copolyamides selon l'invention, éventuellement chargés, peuvent par exemple être injectés aisément en utilisant une température matière pas trop élevée du type de celles allant par exemple de 310 à 350 °C.

Les exemples qui suivent montrent, de manière non limitative, comment la présente invention peut être mise en pratique.

Dans ces exemples, un certain nombre de contrôles sont effectués. On indique ci-après les modes opératoires selon lesquels ils sont effectués :

- DETERMINATION DES TAUX DE GROUPEMENTS TERMINAUX COOH (GT COOH) et $NH_2$ (GT $NH_2$) SUR POLYMERE :

Cette détermination est réalisée par dosage potentiométrique d'une solution de polymère par l'acide trifluorométhanesulfonique 0,02N. La méthode permet de doser simultanément les groupements COOH et $NH_2$ par ajout d'une solution d'hydroxyde de tétrabutylammonium 0,05N dans le nitrobenzène. Les résultats sont exprimés en milliéquivalents par kilogramme de polymère (méq/kg).

- DOSAGE DE LA METHYLPIPERIDINE DANS LE POLYMERE :

Le dosage de la méthyl-3 pipéridine (MPP) dans le polymère est réalisé par chromatographoe en phase gazeuse. Le principe de la méthode est le suivant :

. le polymère subit tout d'abord une hydrolyse chlorhydrique, puis il est neutralisé avec de la soude jusqu'à un pH légèrement basique,
. les amines sont alors extraites quantitativement par le chloroforme, et
. cet extrait chloroformique est enfin analysé par chormatographie en phase gazeuse et la méthyl-3 pipéridine est dosée par la méthode de l'étalon interne. Le nombre de groupements terminaux MPP (GT MPP) sur le polymère est exprimé là aussi en méq/kg.

- DOSAGE DE LA BIS-HEXAMETHYLENETRIAMINE (BHT) DANS LE POLYMERE :

Ce dosage est réalisé par chromatographie en phase gazeuse. Le principe de la méthode est le suivant :

. le polymère subit tout d'abord une hydrolyse chlorhydrique, puis il est neutralisé avec de la soude jusqu'à un pH légèrement basique,
. les amines sont alors extraites quantitativement par le chloroforme et l'extrait chloroformique obtenu est concentré par évaporation de chloroforme, puis
. la solution concentrée obtenue est enfin analysée par chromatographie en phase gazeuse et la BHT est dosée par la méthode de l'étalon interne. La teneur en BHT sera donnée en millimoles par kilogramme de polymère (mM/kg) et en % en poids dans le polymère (1 mM de BHT = 0,215 g).

- MESURE DE L'INDICE DE VISCOSITE (IV) SUR POLYMERE :

Cet indice est déterminé à 25 °C selon la norme internationale ISO 307, 2e édition de 1984, sur une solution contenant 0,5 g de polymère (séché pendant 2 heures à 60 °C sous balayage d'argon) dans 100 $cm^3$ de métacrésol. Pour les polymères riches en hexaméthylènediamine, dans le cas où la dissolution ne peut être réalisée dans le métacrésol , on utilise alors le $H_2SO_4$ concentré à 95 % en poids.

- DOSAGE DE LA BASICITE PERDUE DANS LES DISTILLATS :

La mesure de cette basicité est effectuée par un dosage potentiométrique simple par HCl sur la totalité de l'eau condensée pendant les phases de distillation sous pression constante et pendant la décompression.

- DETERMINATION DU COMPORTEMENT THERMIQUE DU POLYMERE :

Cette détermination du comportement thermique est faite par analyse calorimétrique différentielle (DSC) à l'aide d'un appareil Mettler de type TA 3000 DSC 30. On opère sous azote en 3 étapes (cycle thermique) :

. montée de 25 °C à 350 °C à raison de 10 °C/min ; maintien 2 minutes à 350 °C ; cette étape sert à effacer le passé thermique du polymère ;
. descente de 350 °C à 25 °C à raison de 10 °C/min ; cette étape sert à obtenir la température de cristallisation au refroidissement (Tcr) ;
. nouvelle montée de 25 °C à 350 °C à raison de 10 °C/min ; cette étape sert à obtenir la température de transition vitreuse (Tg) et la température de fusion (Tf) du polymère.

<u>EXEMPLE 1</u> :

Dans cet exemple, on décrit la préparation d'un copolyamide semi-cristallin à partir d'acide téréphtalique, de méthyl-2 pentaméthylènediamine et d'hexaméthylènediamine (50 % en mode dans le mélange des diamines) par le procédé en masse fondue dit "premier procédé commode".

1/ préparation du sel diamines (méthyl-2 pentaméthylènediamine et hexaméthylènediamine)/acide téréphtalique en solution aqueuse :

On opère dans un réacteur en verre de 10 litres équipé :

- d'un système de chauffage,
- d'un agitateur de type ancre,

- d'un système permettant un balayage d'azote et le maintien d'une atmosphère exempte d'oxygène, et
- d'un système permettant de condenser les produits volatils.

On introduit à froid dans le réacteur maintenu sous léger balayage d'azote :

- 1079,7 g d'acide téréphtalique (6,504 modes),
- 793,6 g de méthyl-2 pentaméthylènediamine (6,841 moles),
- 1834,1 g de sel hexaméthylènediamine/acide téréphtalique cristallisé sec (6,509 modes),
- 3,8 g d'hexaméthylènediamine (0,033 mode), et
- 3707 g d'eau distillée.

On élève la température de la masse à 75 °C et on agite le mélange pendant 2 heures en maintenant le balayage d'azote. On mesure ensuite le pH à 20 °C sur une solution aqueuse à 10 % en poids de sel. On obtient un pH de 9,18 ; dans cet exemple, on met en oeuvre un excès molaire de méthyl-2 pentaméthylènediamine de 5,18 % et un excès molaire de réactif aminé de 2,84 %.

2/ Polycondensation en autoclave :

L'appareillage utilisé est constitué par un autoclave de 7,5 litres en acier inoxydable agité et équipé pour travailler jusqu'à 340 °C et 2,2 MPa de pression. Il est muni :

- d'un système de chauffage à double enveloppe par fluide caloporteur,
- d'un agitateur de type cadre,
- d'un système permettant la mise sous pression d'azote,
- d'un circuit permettant de condenser et de recueillir les produits volatils,
- et d'un dispositif de mise sous une pression inférieure à la pression atmosphérique.

On introduit 7,361 kg de la solution aqueuse de sel préparée ci-avant avec 3,2 g d'une solution aqueuse à 50 % en poids d'acide hypophosphoreux. Après 3 purges à l'azote par mise sous pression de $4.10^5$ Pa puis décompression, on effectue en 40 minutes la concentration de la solution aqueuse de sel de 50 % en poids à 72,7 % en poids, par évaporation sous une pression constante de $9.10^5$ Pa d'une partie de l'eau présente dans le milieu ; la température atteint alors 184,3 °C.

Après on effectue successivement les étapes suivantes :

. <u>étape 1</u> :

On élève la température de la solution aqueuse à 72,7 % en poids de sel à T1 = 209,2 °C en 50 minutes en maintenant la pression autogène. On atteint alors 1,65 MPa de pression. On distille ensuite sous une pression comprise entre 1,65 et 1,45 MPa en 2 heures l'eau présente dans la masse réactionnelle de manière à atteindre une température de masse égale à T2 = 282,7 °C ;

. <u>étape 2</u> :

On décomprime jusqu'à pression atmosphérique en 1 heure 10 minutes et on élève dans le même temps la température de la masse à la valeur T3 = 306,2 °C tout en continuant à assurer une distillation régulière d'eau ;

. <u>étape 3</u> :

On achève la polycondensation en opérant sous la pression atmosphérique avec une température de masse portée à 315 °C pendant une durée de 45 minutes.

L'agitation est arrêtée, puis on établit dans l'autoclave une pression d'azote et on soutire le polymère. Ce dernier, extrudé de l'autoclave sous forme de jonc, est refroidi par passage dans un bain d'eau froide, puis il est granulé et séché.

3/ Résultats :

Le polymère obtenu est homogène et a un aspect de polymère semi-cristallin. Il présente les caractéristiques suivantes :

. <u>Caractéristiques moléculaires</u> :

- GT $NH_2$ = 35 méq/kg ;
- GT COOH = 84 méq/kg ;
- GT MPP = 25 méq/kg ;
- teneur en BHT = 9,9 mM/kg, soit 0,213 % en poids ;
- la masse moléculaire en nombre calculée est de 14 914 g/mole ;
- IV (m-crésol) = 120 ml/g ;
- pertes en basicité dans les distillats : 0,5886 équivalents amino d'où une perte en basicité totale de 2,19 %.

. <u>Caractéristiques thermiques</u> :

- Tg = 135 °C ;
- Tcr = 251 °C ;
- Tf = 300 °C ;

- la différence $\Delta T$ = Tf - Tcr est égale à 49 ° C.

. Valeurs thermomécaniques :

Le polymère obtenu est mélangé avec de la fibre de verre 429 YZ de la Société OWENS CORNING de 4,5mm de longueur introduite en veine fondue dans une extrudeuse-dégazeuse à double-vis corotatives de marque LEISTRITZ comportant des vis de diamètre D égal à 34mm et de longueur égale à 35 D, et comprenant : une zone d'alimentation, une zone de mélange chauffée (comprenant un puits de dégazage) et une filière. Le taux de fibres du verre représente 40 % en poids du total polymère + fibres de verre. Les principaux paramètres de marche de l'extrudeuse-dégazeuse sont les suivants :

| | |
|---|---|
| - température de la zone de mélange | 310 ° C, |
| - température de la filière | 300 ° C, |
| - pression de dévolatilisation | $200.10^2$ Pa, |
| - vitesse de rotation de la vis | 150 tours/minute, |
| - débit de matière | 9 kg/heure, |
| - temps de séjour | 2 minutes. |

Le polymère chargé, recueilli à la sortie de extrudeuse sous forme de jonc, est refroidi rapidement dans un bain d'eau à 20 ° C, puis il est découpé en granulés qui sont conditionnés en sac étanche pour éviter toute reprise d'humidité avant le moulage par injection.

Les éprouvettes moulées par injection présentent une température de fléchissement sous charge (TFSC) de 261 ° C sous 1,8 MPa selon la norme NFT 51005.

A propos du moulage des éprouvettes, il est réalisé sur une machine BATTENFELD dans les conditions suivantes :

| | |
|---|---|
| - température matière | 315 ° C, |
| - température du moule | 140 ° C (injection dite en moule froid), |
| - pression d'injection | 100 MPa, |
| - pression de maintien | 35 MPa, |
| - temps de refroidissement | 25 secondes, |
| - temps de cycle | 50 secondes, |
| - débit d'injection | 7,5 $cm^3$/seconde. |

Exemple comparatif :

Dans cet exemple comparatif, on montre qu'en absence d'hexaméthylènediamine dans la composition de départ, l'homopolymère à base d'acide téréphtalique et de méthyl-2 pentaméthylènediamine qui est synthétisé présente, quand il est chargé avec 40 % en poids de fibre de verre et quand il est injecté en moule froid, une TFSC bien inférieure à 240 ° C.

L'homopolyamide semi-cristallin dérivé d'acide téréphtalique et de méthyl-2 pentaméthylènediamine est préparé par un procédé en masse fondue du type de celui décrit dans l'exemple 1 ci-avant :

1/ Préparation du sel acide téréphtalique/méthyl-2 pentaméthylènediamine en solution aqueuse :

On opère dans un réacteur de 500 litres équipé :

- d'un système de chauffage,
- d'un système permettant un balayage d'azote et le maintien d'une atmosphère exempte d'oxygène,
- d'une agitation par hélice.

On introduit à froid dans le réacteur :

- 49,446 kg d'acide téréphtalique (297,87 modes),
- 35,935 kg de méthyl-2 pentaméthylènediamine (309,79 modes), et
- 128,07 kg d'eau.

On élève la température de la masse à 60 ° C et on agite le mélange pendant 2 heures en maintenant le balayage d'azote. Le pH atteint alors la valeur de 9,21 ; on met en oeuvre dans cet exemple un excès molaire de méthyl-2 pentaméthylènediamine de 4 %.

On procède ensuite à l'évaporation d'une partie de l'eau présente dans le milieu. L'appareillage utilisé est constitué par un autoclave de 400 litres en acier inoxydable non agité et équipé pour travailler jusqu'à 130 °C et 0,8 MPa de pression. Il est muni :

- d'un système de chauffage,
- d'un système permettant la mise sous azote,
- d'un circuit permettant de condenser et de recueillir les produits volatils.

On transfère dans cet autoclave la totalité de la solution aqueuse de sel préparé ci-avant. Après 3 purges à l'azote par mise sous pression de $4.10^5$ Pa puis décompression, on effectue en 30 minutes la concentration de la solution aqueuse de sel de 40 % à 69,2 % en poids, par évaporation à la pression atmosphérique d'une partie de l'eau présente dans le milieu ; la température atteint alors 103 °C.

2/ Polycondensation en autoclave :

L'appareillage utilisé est constitué par un autoclave de 200 litres en acier inoxydable agité et équipé pour travailler jusqu'à 320 °C et 2,2 MPa de pression. Il est muni :

- d'un système de chauffage à double enveloppe par fluide caloporteur,
- d'un agitateur type ancre,
- d'un système permettant la mise sous pression d'azote,
- d'un circuit permettant de condenser et de recueillir les produits volatils,
- et d'un dispositif de mise sous une pression inférieure à la pression atmosphérique.

On transfère dans cet autoclave la totalité de la solution aqueuse concentrée à 69,2 % en poids de sel. On procède alors selon le même mode opératoire que celui indiqué dans l'exemple 1 avec les variantes suivantes :

. au niveau de l'étape 1 :

On élève la température de la solution aqueuse à 72,7 % en poids de sel à T1 = 180 °C en 20 minutes en maintenant la pression autogène. On atteint alors 0,85 MPa de pression. On distille ensuite sous pression constante de 0,85 MPa en 2 heures 45 minutes l'eau présente dans la masse réactionnelle de manière à atteindre une température de masse égale à T2 = 275 °C ;

. au niveau de l'étape 2 :

On décomprime jusqu'à pression atmosphérique en 1 heure 10 minutes et on élève dans le même temps la température jusqu'à 298 °C tout en continuant à assurer une distillation régulière de l'eau ;

. au niveau de l'étape 3 :

On établit ensuite une mise sous pression réduite de $533.10^2$ Pa en 22 minutes tout en élevant dans le même temps la température de la masse a 300 °C, et on termine la polycondensation en continuant à agiter la masse a 300 °C sous $533.10^2$ Pa pendant 20 autres minutes.

3/ Résultats :

. au niveau des caractéristiques moléculaires du polymère :

- GT $NH_2$ = 68,8 méq/kg ;
- GT COOH = 36,1 méq/kg ;
- GT MPP = 25 méq/kg ;
- la masse moléculaire en nombre calculée est de 13899 g/mole ;
- IV (m-crésol) = 105,1 ml/g ;
- pertes en basicité dans les distillats : 1,7177 équivalent amino d'où une perte en basicité totale de 2.39 % ;

. au niveau des caractéristiques thermiques :

- Tg = 143 °C ;
- Tcr = 174 °C ;
- Tf = 285 °C ;
- la différence $\Delta T$ = Tf - Tcr est égale à 111 °C ;

. au niveau des caractéristiques thermomécaniques du polymère chargé avec 40 % en poids de fibres de verre :

* Paramètres de marche de l'extrudeuse-dégazeuse ayant été modifiés par rapport aux données de l'exemple 1 :

| | |
|---|---|
| - température de la zone de mélange<br>- température de la filière | 295 °C,<br>290 °C ; |

* Conditions de moulage des éprouvettes ayant été modifiées par rapport aux données de l'exemple 1 :

| | |
|---|---|
| - température matière<br>- pression d'injection | 295 ° C,<br>80 MPa. |

* TFSC = 146 ° C.

EXEMPLE 2 :

Dans cet exemple, on décrit la préparation d'un copolyamide semi-cristallin à partir d'acide téréphtalique, de méthyl-2 pentaméthylènediamine et d'hexaméthylènediamine (60 % en mode dans le mélange des diamines) par le procédé de polycondensation thermique conduite en solution dit "troisième procédé commode".

1/ Préparation des réactifs :

On opère dans un petit réacteur de verre cylindrique de 100 ml, muni d'un agitateur type ancre. Le chauffage du réacteur est assuré par l'immertion de celui-ci dans un bain d'alliage de Lipowitz chauffé au-dessus de 180 ° C. Le réacteur est aussi équipé :

- d'un système permettant d'effectuer un balayage d'azote,
- d'un circuit permettant de condenser et de recueillir les produits volatils,
- et d'un dispositif de mise sous une pression inférieure à la pression atmosphérique.

On introduit à froid dans le réacteur :

- 13,75 g de sel hexaméthylènediamine/acide téréphtalique cristallisé et sec (0,04876 mole),
- 5,40 g d'acide téréphtalique (0,03253 mole),
- 3,96 g de méthyl-2 pentaméthylènediamine (0,03414 mole),
- 30 g de diméthyl-1,3 imidazolidone-2.

Les charges correspondent à un excès molaire de méthyl-2 pentaméthylènediamine de 4,99 %, soit un excès molaire de réactif aminé de 1,98 %.

2/ Polycondensation :

On effectue successivement les étapes suivantes :

. étape 1" :

Sous atmosphère d'azote, on élève la température à 215 ° C et on élimine par distillation régulière sous la pression atmosphérique l'eau d'amidification pendant une durée de 30 minutes ;

. étapes 2" :

Sous atmosphère d'azote, on élève la température de la masse réactionnelle à 260 ° C et on élimine par distillation sous la pression atmosphérique le reste d'eau et le solvant pendant une durée de 45 minutes ;

. étape 3" :

On achève la polycondensation en laissant réagir la masse réactionnelle portée à une température de 330 ° C en opérant sous une pression réduite égale à $0,1.10^2$ Pa pendant une durée de 15 minutes.

3/ Résultats :

Le polymère obtenu est homogène et a un aspect semi-cristallin. Il présente des caractéristiques suivantes :

. Caractéristiques moléculaires :
- IV (m-crésol) = 82,3 ml/g ;
- pertes en basicité dans les distillats : $9,48.10^{-3}$ équivalents amino d'où une perte en basicité totale de 5,72 %.

. Caractéristiques thermiques :
- Tg = 140 ° C ;
- Tcr = 296 ° C ;
- Tf = 320 ° C ;
- la différence $\Delta T$ = Tf - Tcr est égale à 24 ° C.

EXEMPLE 3 :

Dans cet exemple, on décrit la préparation d'un copolyamide semi-cristallin à partir d'acide téréphtalique, de méthyl-2 pentaméthylènediamine et d'hexaméthylènediamine (70 % en modes dans le mélange des diamines) par le procédé en masse dit "second procédé commode".

1/ Préparation du sel diamines (méthyl-2 pentaméthylènediamine et hexaméthylènediamine)/acide téréphtalique en solution aqueuse :

On opère dans un réacteur en verre de 2 litres équipé :

- d'un système de chauffage,
- d'un agitateur de type ancre,
- d'un système permettant un balayage d'azote et le maintien d'une atmosphère exempte d'oxygène, et
- d'un système permettant de condenser les produits volatils.

On introduit à froid dans le réacteur maintenu sous léger balayage d'azote :

- 350 g de sel hexaméthylènediamine/acide téréphtalique (1,2411 moles),
- 88,3 g d'acide téréphtalique (0,5319 mode),
- 66,7 g de méthyl-2 pentaméthylènediamine (0,5750 mole), et
- 500 g d'eau.

On obtient un pH de 9,20 ; dans cet exemple, on met en oeuvre un excès molaire de méthyl-2 pentaméthylènediamine de 8,1 %, soit un excès molaire de réactif aminé de 2,43 %.

2/ Polycondensation en autoclave :

L'appareillage utilisé est constitué par un autoclave de 1 litre en acier inoxydable agité et équipé pour travailler jusqu'à 340 ° C et 3 MPa de pression. Il est muni :

- d'un système de chauffage à double enveloppe par fluide caloporteur,
- d'un agitateur de type cadre,
- d'un système permettant la mise sous pression d'azote,
- d'un circuit permettant de condenser et de recueillir les produits volatils,
- et d'un dispositif de mise sous une pression inférieure à la pression atmosphérique.

On introduit 820 g de la solution aqueuse de sel préparée ci-avant avec 0,35 g d'une solution aqueuse à 50 % en poids d'acide hypophosphoreux.

On opère exactement comme indiqué ci-avant à l'exemple 1 jusqu'à la fin de l'étape 1 avec seulement les variantes suivantes :

- on concentre la solution aqueuse de sel de 49,75 % en poids à 69,3 % en poids ; la température atteint alors 194 ° C ;
- au niveau de l'étape 1, la température de début de distillation est égale à 229 ° C, la durée de chauffage étant alors de 20 minutes et on atteint 1,8 MPa de pression autogène. On distille ensuite sous cette pression en 1 heure 35 minutes l'eau présente dans la masse réactionnelle et la température T2 atteinte au bout de ce temps est égale à 244 ° C.

Après, on effectue successivement les étapes suivantes :

. étape 2' :

On effectue rapidement en 10 minutes la vidange du réacteur ; pendant cette période la pression de vapeur d'eau est abaissée de la pression autogène à la valeur de la pression atmosphérique. On récupère le polymère formé qui est un prépolymère, puis on le refroidit et on le transforme par broyage en poudre fine.

Le prépolymère obtenu a un aspect semi-cristallin. Il présente les caractéristiques moléculaires suivantes :

- GT $NH_2$ = 122,5 méq/kg ;
- GT COOH = 123 méq/kg ;
- GT MPP = 5 méq/kg ;
- teneur en BHT = 2,7 mM/kg, soit 0,058 % en poids ;
- la masse moléculaire en nombre calculée est de 8071 g/mole ;
- IV ($H_2SO_4$) = 14,2 ml/g ;
- pertes en basicité dans les distillats : 0,1235 équivalent amino d'où une perte en basicité totale de 3,41 %.

. étape 3' :

On réalise la réaction d'achèvement de la polycondensation en effectuant la post-condensation en phase solide du prépolymère en poudre obtenu.

On opère dans un petit réacteur de verre cylindrique de 100 ml muni d'un agitateur de type ancre. Le chauffage du réacteur est assuré par l'immertion de celui-ci dans un bain d'alliage de Lipowitz chauffé au-dessus de 180 °C. Le réacteur est aussi équipé :

- d'un système permettant d'effectuer un balayage d'azote,
- et d'un dispositif de mise sous une pression inférieure à la pression atmosphérique.

On introduit à froid dans le réacteur 25 g de poudre de prépolymère, puis on réalise un balayage du réacteur à l'azote afin d'éliminer toute trace d'oxygène et enfin la température est portée à 260 °C sous une pression réduite de $0{,}66.10^2$ Pa pendant une durée de 2 heures 30 minutes.

3/ Résultat :

Le polymère obtenu a un aspect semi-cristallin. Il présente les caractéristiques suivantes :

. <u>Caractéristiques moléculaires</u> :
- IV ($H_2SO_4$) = 148 ml/g ;

. <u>Caractéristiques thermiques</u> :
- Tg = 127 °C ;
- Tcr = 310 °C ;
- Tf = 322 °C et 344 °C ;
- la différence $\Delta T$ = Tf - Tcr possède les valeurs de 12 °C et 34 °C.

**Revendications**

**1.** Copolyamides semi-aromatiques semi-cristallins obtenus à partir de réactifs comprenant de l'acide téréphtalique (ou un dérivé) et de la méthyl-2 pentaméthylènediamine, qui possèdent une température de transition vitreuse Tg au moins égale à 12O °C et une température de fléchissement sous charge (selon la norme NF T 51005) sous 1,8 MPa au moins égale à 240 °C quand ces copolyamides sont chargés avec au moins 10 à 60 % en poids par rapport au copolyamide + charge d'une charge de fibres de verre, les copolyamides présentant un indice de viscosité (selon la norme ISO R 307) au moins égal à 60 ml/g et un poids moléculaire d'au moins 9000 g/mol, puis moulésles dits copolyamides étant caractérisés par les points suivants :

. ils consistent en unités de récurrence de formule (I), (II), (III) et (IV) :

(I) désignant la structure :

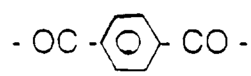

(II) désignant la structure :

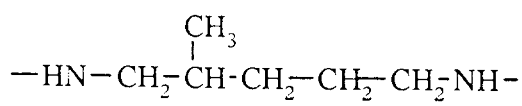

(III) désignant la structure :

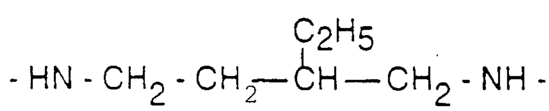

(IV) désignant la structure : $-HN-(CH_2)_6\ NH-$

et des unités non conformes dérivées de bis-hexaméthylènetriamine les unités de formule (III) étant facultatives,

. le rapport moléculaire des unités (I) par rapport à la somme des unités (II) + (III) + (IV) est égal à 1 ;

. la quantité des unités (III) dans le mélange (II) + (III) se situe dans l'intervalle allant de 0 à 5 % en mole et celle des unités (II), par rapport à la même référence, se situe dans l'intervalle allant

de 100 à 95 % en mole ;

. la quantité des unités (IV) dans le mélange (II) + (III) + (IV) se situe dans l'intervalle allant de 40 à 90 % en mole ;

. la teneur en unités non conformes dérivées exprimée en pourcentage en poids de bis-hexaméthylènetriamine par rapport au poids de copolyamide obtenu, est inférieure à 0,5 %.

**2.** Copolyamides selon la revendication 1, caractérisés en ce qu'ils présentent une structure dans laquelle la quantité des unités (IV) dans le mélange (II) + (III) + (IV) se situe dans l'intervalle allant de 45 à 75 % en mole.

**3.** Copolyamides selon l'une quelconque des revendications 1 et 2, caractérisés en ce qu'ils présentent un taux de groupements terminaux de type amine cyclique limiteur de chaîne qui est inférieur à 70 méq/kg.

**4.** Procédé de préparation des copolyamides selon l'une quelconque des revendications 1 à 3, qui consiste dans la technique de polycondensation thermique en masse fondue, caractérisé en ce que l'on polycondense une composition de départ :

* renfermant : (i) soit des quantités stoechiométriques ou voisines de la stroechiomètrie de diacide et de diamines apportant des nombres de groupements COOH et $NH_2$ égaux ou voisins, soit leur-(s) sel(s) stoechimétrique(s) avec éventuellement un excès de diacide et/ou de diamine(s) à l'état libre, (2i) de l'eau en quantité suffisante pour permettre de conduire la distillation de l'étape 1 indiquée ci-après dans les conditions particulières de température (T1 et T2) et de pression (P) indiquées également ci-après et (3i) éventuellement un catalyseur,
* en opérant dans un système clos de type autoclave, et
* en enchaînant les étapes suivantes :
  - étape 1 : dans laquelle, l'autoclave étant fermé, on augmente progressivement la température de la composition de départ jusqu'à une certaine valeur T1 se situant dans l'intervalle allant de 170 °C à 240 °C puis, sous une pression constante P égale à la pression autogène de vapeur d'eau obtenue qui se situe dans l'intervalle allant de 0,7 à 2,6 MPa, on élimine par distillation régulière l'eau présente dans la masse réactionnelle en élevant progressivement dans le même temps la température de la masse à une valeur T2 supérieure à la température T1 atteinte avant distillation se situant dans l'intervalle allant de 215 °C à 320 °C ;
  - étape 2 : dans laquelle on abaisse progressivement la pression de la valeur de la pression autogène jusqu'à la valeur de la pression atmosphérique et éventuellement on élève dans le même temps la température de la masse à une valeur T3 supérieure d'une dizaine à plusieurs dizaines de degrés Celsius à la température T2 atteinte avant décompression, en continuant à assurer pendant la durée de cette décompression une distillation régulière d'eau ;
  - étape 3 : dans laquelle on achève la polycondensation en agitant la masse réactionnelle un certain temps, en opérant sous la pression atmosphérique et éventuellement/ou sous une pression inférieure avec une température de masse égale ou supérieure à la température T2 ou T3 obtenue en fin d'étape 2, pendant une durée suffisante permettant d'obtenir un polyamide ayant les caractéristiques moléculaires et de viscosité souhaitées.

**5.** Procédé de préparation selon la revendication 4, caractérisé en ce que, après avoir réalisé l'étape 1, on enchaîne, à la place des étapes 2 et 3, les nouvelles étapes suivantes :

- étape 2' : dans laquelle on effectue rapidement, sur une durée allant de 5 minutes à 30 minutes, la vidange du réacteur : pendant cette période la pression autogène de vapeur d'eau est abaissée de la valeur de la pression autogène jusqu'à la valeur de la pression atmosphérique et, en opérant sous une atmosphère inerte (azote), on récupère le prépolymère formé, puis on le refroidit et on le transforme par broyage en poudre ;
- étape 3' : dans laquelle on réalise la réaction d'achèvement de la polycondensation en effectuant la post-condensation du prépolymère en poudre obtenu : soit en phase solide, en opérant dans un réacteur maintenu sous une pression, éventuellement en présence de gaz inerte (azote), comprise entre la valeur de la pression atmosphérique et une valeur inférieure égale à $0{,}1.10^2$ Pa, à une température allant de 200 °C à 280 °C et pendant une durée suffisante permettant d'obtenir un copolyamide ayant les caractéristiques moléculaires et de viscosité souhaitées, allant de 10 minutes à 5 heures ; soit en phase fondue, en opérant dans une extrudeuse-dégazeuse comportant une ou plusieurs vis, les paramètres de marche essentiels de la dite extrudeuse-dégazeuse consistant dans : la température de la zone de réaction qui se situe dans l'intervalle allant de 310 °C à 360 °C, la pression de dévolatilisation de cette zone qui se situe dans l'intervalle allant de la valeur de la pression atmosphérique à une valeur inférieure égale à $0{,}1.10^2$ Pa et le temps de séjour du prépolymère dans l'extrudeuse-dégazeuse qui se situe dans l'intervalle allant de 30 secondes à 5 minutes ; soit en enchaînant la post-condensation en phase fondue et la post-condensation en phase solide.

**6.** Procédé de préparation des copolyamides selon l'une quelconque des revendications 1 à 3, qui consiste dans la technique de polycondensation thermique conduite en solution, caractérisé en ce que l'on on enchaîne les étapes suivantes :
- étape 1'' : conduite sous atmosphère inerte (azote), dans laquelle on dissout la composition de départ, renfermant les éléments (i) et (3i) dont on a parlé ci-avant dans la revendication 4, dans un solvant polaire aprotique ou mélange de pareils solvants ayant un point d'ébullition supérieur à 220 °C en opérant à température ambiante de 20 °C à 30 °C, puis on élève la température de la solution obtenue à la température de réaction désirée comprise entre 190 °C et 220 °C, et on élimine par distillation régulière sous la pression atmosphérique l'eau d'amidification pendant une durée allant de 20 minutes à 2 heures ;
- étape 2'' : conduite encore sous atmosphère inerte, dans laquelle on élève la température de la solution réactionnelle à une valeur située au-dessus du point d'ébullition du (ou des) solvant(s) mis en oeuvre, puis on élimine toujours par distillation sous la pression atmosphérique le reste d'eau d'amidification et le (ou les) solvant(s) présent(s) ;
- étape 3'' : dans laquelle, une fois le (ou les) solvant(s) éliminé(s), on achève la polycondensation en laissant réagir la masse réactionnelle à une température allant de 300° à 340 °C, en opérant sous une pression réduite se situant dans l'intervalle allant de $0{,}1.10^2$ Pa à $1.10^2$ Pa pendant une durée (comprenant la durée de mise sous pression réduite) suffisante permettant d'obtenir un copolyamide ayant les caractéristiques moléculaires et de viscosité souhaitées, allant de 10 minutes à 1 heure.

**7.** Articles conformés tels que des objets moulés, des fils ou des films issus des copolyamides selon l'une quelconque des revendications 1 à 3 précédentes.

**8.** Compositions, destinées à la réalisation de moulage par injection, comprenant (a) un copolyamide semi-aromatique semi-cristallin selon la revendication 1 et (z) au moins une charge de remplissage ou de renforcement en quantité au plus égale à 80 % du poids de l'ensemble polymère + charge(s).

**9.** Compositions selon la revendication 8, caractérisées en ce que le constituant copolyamide présente une structure dans laquelle la quantité des unités (IV) dans le mélange (II) + (III) + (IV) se situe dans l'intervalle allant de 45 à 75 % en mole.

**10.** Compositions selon l'une quelconque des revendications 8 et 9, caractérisées en ce que le constituant copolyamide présente un taux de groupements terminaux de type amine cyclique limiteur de chaîne qui est inférieur à 70 méq/kg.

**11.** Compositions selon l'une quelconque des revendications 8 à 10, caractérisées en ce que la charge de remplissage ou de renforcement est prise dans le groupe formé par : des fibres d'amiante ; des fibres de carbone ; des fibres de carbure ou de nitrure d'un métal ou d'un métalloïde ; des fibres de verre ; des microbilles de verre ; des paillettes de mica ; du talc ; ou des mélanges de deux ou de plus de deux des matières précitées.

**12.** Articles conformés sous forme d'objets moulés issus des compositions selon l'une quelconque des revendications 8 à 11 précédentes.

## Claims

**1.** Semicrystalline semiaromatic copolyamides obtained from reactants including terephthalic acid (or a derivative) and 2-methylpentamethylenediamine, which have a glass transition temperature Tg of at least 120 °C and a deflection temperature under load (according to NF standard T 51005) under 1.8 MPa of at least 240 °C when these copolyamides are filled with at least 10 to 60 % by weight, relative

to the weight of copolyamide + filler, of a glass fibre filler, the copolyamides exhibiting a viscosity number (according to ISO standard R 307) of at least 60 ml/g and a molecular weight of at least 9000 g/mol, and then moulded, the said copolyamides being characterised by the following points:

- they consist of repeat units of formula (I), (II), (III) and (IV):

  (I) denoting the structure:

  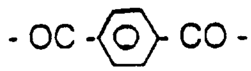

  (II) denoting the structure:

  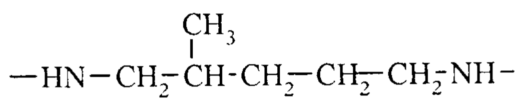

  (III) denoting the structure:

  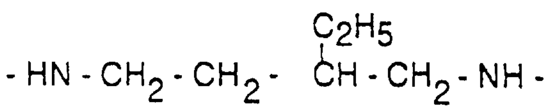

  (IV) denoting the structure: $-HN-(CH_2)_6\ NH-$

  and nonconforming units derived from bishexamethylenetriamine, the units of formula (III) being optional,
- the molecular ratio of the units (I) relative to the sum of the units (II) + (III) + (IV) is equal to 1;
- the quantity of the units (III) in the mixture (II) + (III) lies in the range from 0 to 5 mol% and that of the units (II) relative to the same reference lies in the range from 100 to 95 mol%;
- the quantity of units (IV) in the mixture (II) + (III) + (IV) lies in the range from 40 to 90 mol%;
- the content of derived nonconforming units, expressed as percentage by weight of bishexamethylenetriamine relative to the weight of copolyamide obtained, is lower than 0.5 %.

**2.** Copolyamides according to Claim 1, characterized in that they have a structure in which the quantity of the units (IV) in the mixture (II) + (III) + (IV) lies in the range from 45 to 75 mol%.

**3.** Copolyamides according to either of Claims 1 and 2, characterized in that they have a content of end groups of chain-limiting cyclic amine type which is lower than 70 meq/kg.

**4.** Process for the preparation of the copolyamides according to any one of Claims 1 to 3, which consists of the technique of thermal polycondensation in a melt, characterized in that a starting composition is polycondensed:

- containing: (i) either stoichiometric or near-stoichiometric quantities of diacid and of diamines contributing equal or similar numbers of COOH and $NH_2$ groups, or their stoichiometric salt(s) with optionally an excess of diacid and/or of diamine(s) in the free state, (ii) water in sufficient quantity to make it possible to conduct the distillation of stage 1 indicated below in the particular conditions of temperature (T1 and T2) and of pressure (P) which are also indicated below and (iii) optionally a catalyst,
- by operating in a closed system of autoclave type, and
- by linking into a sequence the following stages:
  - stage 1: in which, the autoclave being closed, the temperature of the starting composition is progressively increased to a certain value T1 lying in the range from 170 ° C to 240 ° C; then, at a constant pressure P equal to the autogenous water vapour pressure obtained, which lies in the range from 0.7 to 2.6 MPa, the water present in the reaction mass is removed by steady distillation while at the same time the temperature of the mass is progressively raised to a

value T2 higher than the temperature T1 reached before distillation, lying in the range from 215 °C to 320 °C;
- stage 2: in which the pressure is progressively lowered from the autogenous pressure value to the value of atmospheric pressure and optionally at the same time the temperature of the mass is raised to a value T3 which is higher by between about ten to several tens of degrees Celsius than the temperature T2 reached before decompression, while a steady distillation of water during the period of this decompression continues to be ensured;
- stage 3: in which the polycondensation is completed by stirring the reaction mass for a certain time, the operation being performed at atmospheric pressure and optionally/or at a lower pressure with a mass temperature equal to or higher than the temperature T2 or T3 obtained at the end of stage 2, for a sufficient period making it possible to obtain a polyamide which has the desired molecular and viscosity characteristics.

**5.** Process of preparation according to Claim 4, characterized in that, after having carried out stage 1, the following new stages are linked into a sequence instead of stages 2 and 3:
- stage 2': in which draining of the reactor is performed rapidly over a period ranging from 5 minutes to 30 minutes; during this period the autogenous water vapour pressure is lowered from the autogenous pressure value to the value of the atmospheric pressure and, with the operation being carried out under an inert atmosphere (nitrogen), the prepolymer formed is recovered and is then cooled and is converted into powder by grinding;
- stage 3': in which the completion reaction of the polycondensation is carried out by performing the postcondensation of the prepolymer obtained in powder form; either in solid phase, the operation being carried out in a reactor maintained at a pressure, optionally in the presence of inert gas (nitrogen), of between the value of atmospheric pressure and a lower value equal to $0.1 \times 10^2$ Pa, at a temperature ranging from 200 °C to 280 °C and for a sufficient period making it possible to obtain a copolyamide which has the desired molecular and viscosity characteristics, ranging from 10 minutes to 5 hours; or in melt phase, the operation being carried out in a degassing extruder comprising one or more screws, the essential running parameters of the said degassing extruder consisting of: the temperature of the reaction zone, which lies in the range from 310 °C to 360 °C, the devolatilization pressure of this zone, which lies in the range from the value of atmospheric pressure to a lower value equal to $0.1 \times 10^2$ Pa, and the residence time of the prepolymer in the degassing extruder, which lies in the range from 30 seconds to 5 minutes; or by linking into a sequence the postcondensation in melt phase and the postcondensation in solid phase.

**6.** Process for the preparation of the copolyamides according to any one of Claims 1 to 3, which consists of the technique of thermal polycondensation conducted in solution, characterized in that the following stages are linked into a sequence:
- stage 1'': conducted under inert atmosphere (nitrogen), in which the starting composition containing the components (i) and (iii) which were mentioned above in Claim 4 is dissolved in an aprotic polar solvent or mixture of such solvents which has a boiling point higher than 220 °C, the operation being carried out at ambient temperature of 20 °C to 30 °C, then the temperature of the solution obtained is raised to the desired reaction temperature of between 190 °C and 220 °C, and the water of amidification is removed by steady distillation at atmospheric pressure over a period ranging from 20 minutes to 2 hours;
- stage 2'': conducted again under inert atmosphere, in which the temperature of the reaction solution is raised to a value lying above the boiling point of the solvent(s) used, and then the remainder of amidification water and the solvent(s) present are removed, still by distillation at atmospheric pressure;
- stage 3'': in which, once the solvent(s) has (have) been removed, the polycondensation is completed by allowing the reaction mass to react at a temperature ranging from 300 ° to 340 °C, the operation being carried out at a reduced pressure lying in the range from $0.1 \times 10^2$ Pa to $1 \times 10^2$ Pa for a sufficient period (including the period for reducing pressure) making it possible to obtain a copolyamide which has the desired molecular and viscosity characteristics, ranging from 10 minutes to 1 hour.

**7.** Shaped articles such as moulded objects, yarns or films produced from the copolyamides according to any one of the preceding Claims 1 to 3.

**8.** Compositions intended for carrying out injection moulding, including (a) a semicrystalline semiaromatic copolyamide according to Claim 1 and (z) at least one filling or reinforcing filler in a quantity not exceeding 80 % of the weight of the combination of polymer + filler(s).

**9.** Compositions according to Claim 8, characterized in that the copolyamide constituent has a structure in which the quantity of the units (IV) in the mixture (II) + (III) + (IV) lies in the range from 45 to 75 mol%.

**10.** Compositions according to either of Claims 8 and 9, characterized in that the copolyamide constituent has a content of end groups of the chain-limiting cyclic amine type which is lower than 70 meq/kg.

**11.** Compositions according to any one of Claims 8 to 10, characterized in that the filling or reinforcing filler is taken from the group made up of: asbestos fibres, carbon fibres, fibres of a metal or metalloid carbide or nitride, glass fibres, ballotini, mica flakes, talc, or mixtures of two or of more than two of the abovementioned materials.

**12.** Shaped articles in the form of moulded objects produced from the compositions according to any one of the above Claims 8 to 11.

## Patentansprüche

**1.** Halbkristalline halbaromatische Copolyamide, erhalten ausgehend von Terephthalsäure (oder ein Derivat) und 2-Methyl-pentamethylendiamin umfassenden Reaktionspartnern, die eine Glastemperatur Tg von mindestens 120 °C und eine Durchbiegungstemperatur unter 1,8 MPa Belastung (gemäß der Norm NF T 51005) von mindestens 240 °C besitzen, wenn diese Copolymere mit mindestens 10 bis 60 Gew.-% eines Füllstoffes aus Glasfasern, bezogen auf das Gewicht von Copolyamid + Füllstoff, ausgestattet sind, wobei die Copolyamide, die einen Viskositätsindex (gemäß der Norm ISO R 307) von mindestens 60 ml/g und ein Molekulargewicht von mindestens 9000 g/mol aufweisen, anschließend gegossen werden und durch die folgenden Punkte gekennzeichnet sind:

- sie bestehen aus wiederkehrenden Einheiten der Formeln (I), (II), (III) und (IV):

  (I) bezeichnet die Struktur:

  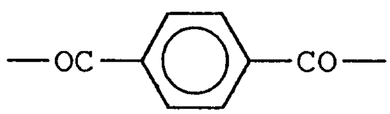

  ;

  (II) bezeichnet die Struktur:

  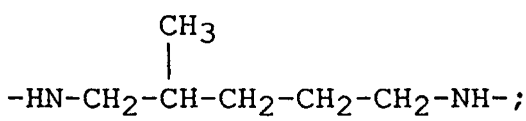

  (III) bezeichnet die Struktur:

  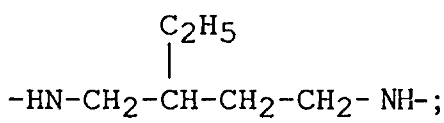

  (IV) bezeichnet die Struktur: $-HN-(CH_2)_6-NH-$;

  und nicht übereinstimmenden Einheiten, die von Bis-Hexamethylentriamin abgeleitet sind, wobei die Einheiten der Formel (III) fakultativ sind,
- das molekulare Verhältnis der Einheiten (I), bezogen auf die Summe der Einheiten (II) + (III) + (IV) ist gleich 1,

- die Menge der Einheiten (III) in der Mischung (II) + (III) liegt im Intervall von 0 bis 5 Mol.-% und die der Einheiten (II), bezogen auf die gleiche Referenz, liegt im Intervall von 100 bis 95 Mol.-%,
- die Menge der Einheiten (IV) in der Mischung (II) + (III) + (IV) liegt im Intervall von 40 bis 90 Mol.-%,
- der Gehalt an nicht übereinstimmenden, abgeleiteten Einheiten, ausgedrückt in Gewichtsprozent Bis-Hexamethylentriamin und bezogen auf das Gewicht des erhaltenen Copolyamides, liegt unterhalb von 0,5 %.

**2.** Copolyamide nach Anspruch 1, dadurch gekennzeichnet, daß sie eine Struktur aufweisen, in der die Menge der Einheiten (IV) in der Mischung (II) + (III) + (IV) im Intervall von 45 bis 75 Mol.-% liegt.

**3.** Copolyamide nach irgendeinem der Ansprüche 1 und 2, dadurch gekennzeichnet, daß sie einen Gehalt an Endgruppen vom Typ cyclischen Amins, das die Kette begrenzt, aufweisen, der unterhalb von 70 Milliäquivalent/kg liegt.

**4.** Verfahren zur Herstellung der Copolyamide nach irgendeinem der Ansprüche 1 bis 3, das in der Technik der thermischen Polykondensation in geschmolzener Masse besteht, dadurch gekennzeichnet, daß man eine Ausgangs-Zusammensetzung polykondensiert:

* die umfaßt: (i) entweder stöchiometrische oder fast stöchiometrische Mengen von Disäuren und Diaminen, die eine gleiche oder fast gleiche Anzahl von Gruppen COOH und $NH_2$ tragen, oder ihre stöchiometrischen Salze mit gegebenenfalls einem Überschuß von Disäure und/oder Diamin im freien Zustand, (2i) Wasser in ausreichender Menge, um die Durchführung der nachstehend genannten Stufe 1 unter den ebenfalls nachstehend angegebenen besonderen Bedingungen von Temperatur (T1 und T2) und Druck (P) zu ermöglichen und (3i) gegebenenfalls einen Katalysator,

* Durchführung in einem geschlossenen System vom Typ eines Autoklaven,

* unter Aneinanderreihung der folgenden Stufen:

- Stufe 1: in der man nach dem Verschließen des Autoklavens die Temperatur der Ausgangs-Zusammensetzung schrittweise bis auf einen gewissen Wert T1 erhöht, der sich im Intervall von 170 °C bis 240 °C befindet, und man anschließend unter einem konstanten Druck P, der gleich dem ursprünglichen erhaltenen Wasserdampfdruck ist, der sich im Intervall von 0,7 bis 2,6 MPa befindet, durch gesteuerte Destillation das in der Reaktionsmasse anwesende Wasser entfernt, unter schrittweisem Erhöhen der Temperatur der Masse in der gleichen Zeit auf einen Wert T2, der höher als die Temperatur T1 ist, vor der Destillation erreicht wird und im Intervall von 215 °C bis 320 °C liegt;
- Stufe 2: in der man schrittweise den Wert des ursprünglichen Druckes bis auf den Wert des atmosphärischen Druckes absenkt und gegebenenfalls in der gleichen Zeit die Temperatur der Masse auf einen Wert T3 erhöht, der zehn Grad Celsius oder einige zehn Grad Celsius höher liegt als die Temperatur T2, erreicht vor der Dekompression, wobei man kontinuierlich während der Dauer dieser Dekompression eine gesteuerte Destillation von Wasser sichert;
- Stufe 3: in der man die Polykondensation abschließt, indem die Reaktionsmasse einige Zeit lang gerührt wird, wobei man unter atmosphärischem Druck und gegebenenfalls/oder einem niedrigeren Druck mit einer Masse-Temperatur arbeitet, die gleich oder höher ist als die am Ende der Stufe 2 erhaltene Temperatur T2 oder T3, und während einer Dauer, die ausreichend ist, das Erhalten eines Polyamides mit den gewünschten molekularen und Viskositäts-Charakteristiken zu ermöglichen.

**5.** Verfahren zur Herstellung nach Anspruch 4, dadurch gekennzeichnet, daß man nach der Durchführung der Stufe 1 anstelle der Stufen 2 und 3 die folgenden neuen Stufen anreiht:

- Stufe 2': in der man schnell während einer Dauer von 5 Minuten bis 30 Minuten die Entleerung des Reaktors vornimmt: während dieser Periode wird der ursprüngliche Wasserdampfdruck vom Wert des ursprünglichen Druckes bis auf den Wert des atmosphärischen Druckes abgesenkt und, indem man unter inerter Atmosphäre (Stickstoff) arbeitet, gewinnt man das gebildete Prepolymer, kühlt es anschließend und überführt es mittels Zerkleinerung in Pulverform;
- Stufe 3': in der man die Reaktion zur Beendigung der Polykondensation realisiert, indem man die Nachkondensation des in Pulverform erhaltenen Prepolymers durchführt: entweder in fester Phase, indem man in einem Reaktor arbeitet, der unter Druck gehalten wird, gegebenenfalls in Anwesenheit von inertem Gas (Stickstoff) unter einem Druck zwischen dem atmosphärischem Druck und einem Druck von unterhalb oder gleich $0{,}1 \cdot 10^2$ Pa, bei einer Temperatur von 200 °C

bis 280 °C und während einer Dauer, die ausreichend ist, das Erhalten eines Copolyamides mit den gewünschten molekularen und Viskositäts-Charakteristiken zu ermöglichen, die 10 Minuten bis 5 Stunden beträgt; oder in geschmolzener Phase, indem man in einem Entgasungs-Extruder mit einer oder mehreren Schnecken arbeitet, wobei die wesentlichen Betriebsparameter des genannten Entgasungs-Extruders bestehen in: der Temperatur der Reaktionszone, die im Intervall von 310 °C bis 360 °C liegt, dem Druck der Entgasung dieser Zone, der im Intervall vom Wert des atmosphärischen Druckes bis zu einem Wert von unterhalb oder gleich $0{,}1 \cdot 10^2$ Pa liegt, und der Verweilzeit des Prepolymers in dem Entgasungs-Extruder, die im Intervall von 30 Sekunden bis 5 Minuten liegt; oder unter Aneinanderreihung der Nachkondensation in geschmolzener Phase und der Nachkondensation in fester Phase.

**6.** Verfahren zur Herstellung der Copolyamide nach irgendeinem der Ansprüche 1 bis 3, das in der Technik der thermischen Polykondensation in Lösung besteht, dadurch gekennzeichnet, daß man die folgenden Stufen aneinanderreiht:
- Stufe 1": Durchführung unter inerter Atmosphäre (Stickstoff), wobei man die Ausgangs-Zusammensetzung, die die Bestandteile (i) und (3i) umfaßt, von denen vorstehend in Anspruch 4 gesprochen wurde, in einem aprotischen polaren Lösungsmittel oder einer Mischung von verwandten Lösungsmitteln mit einem Siedepunkt von höher als 220 °C löst, wobei man bei Umgebungstemperatur von 20 °C bis 30 °C arbeitet, anschließend die Temperatur der erhaltenen Lösung auf die gewünschte Reaktionstemperatur zwischen 190 °C und 220 °C erhöht und durch gesteuerte Destillation unter atmosphärischem Druck das Wasser der Amidierung während einer Dauer von 20 Minuten bis 2 Stunden entfernt;
- Stufe 2": Durchführung ebenfalls unter inerter Atmosphäre, wobei man die Temperatur der Reaktionslösung auf einen Wert erhöht, der oberhalb des Siedepunktes des oder der eingesetzten Lösungsmittel(s) liegt, und man anschließend immer durch Destillation unter atmosphärischem Druck den Rest des Wassers der Amidierung und des(der) anwesenden Lösungsmittel(s) entfernt;
- Stufe 3": in der man nach der Entfernung des (der) Lösungsmittel(s) die Polykondensation beendet, indem man die Reaktionsmasse bei einer Temperatur von 300 °C bis 340 °C reagieren läßt, wobei man unter reduziertem Druck arbeitet, der im Intervall von $0{,}1 \cdot 10^2$ Pa bis $1 \cdot 10^2$ Pa liegt, und während einer Dauer (umfassend den Zeitraum zur Einstellung des reduzierten Druckes), die ausreichend ist, das Erhalten eines Copolyamides mit den gewünschten molekularen und Viskositäts-Charakteristiken zu ermöglichen, und die 10 Minuten bis 1 Stunde beträgt.

**7.** Geformte Artikel wie gegossene Gegenstände, Fasern oder Filme, die von den Copolyamiden nach irgendeinem der vorstehenden Ansprüche 1 bis 3 stammen.

**8.** Zusammensetzungen für die Durchführung des Spritzgießens, umfassend (a) ein halbkristallines halbaromatisches Copolyamid nach Anspruch 1 und (z) mindestens einen Zusatzstoff zum Ausfüllen oder zur Verstärkung in Mengen von höher oder gleich 80 % des Gesamtgewichtes von Polymer + Zusatzstoff(e).

**9.** Zusammensetzungen nach Anspruch 8, dadurch gekennzeichnet, daß der Copolyamid-Bestandteil eine Struktur aufweist, bei der die Menge der Einheiten (IV) in der Mischung (II) + (III) + (IV) im Intervall von 45 bis 75 Mol.-% liegt.

**10.** Zusammensetzungen nach irgendeinem der Ansprüche 8 und 9, dadurch gekennzeichnet, daß der Copolyamid-Bestandteil einen Gehalt an Endgruppen vom Typ cyclischen Amins, das die Kette begrenzt, aufweist, der unterhalb von 70 Milliäquivalent/kg liegt.

**11.** Zusammensetzungen nach irgendeinem der Ansprüche 8 bis 10, dadurch gekennzeichnet, daß der Zusatzstoff zum Ausfüllen oder zur Verstärkung aus der Gruppe gewählt wird, die besteht aus: Asbestfasern, Kohlenstoffasern, Fasern aus Karbid oder Nitrid eines Metalles oder Metalloides, Glasfasern, Mikrokugeln aus Glas, Glimmerplättchen, Talk oder Mischungen von zwei oder mehr als zwei der vorstehenden Materialien.

**12.** Geformte Artikel in Form von gegossenen Gegenständen, die von den Zusammensetzungen nach irgendeinem der vorstehenden Ansprüche 8 bis 11 stammen.